# EUROPÄISCHE PATENTSCHRIFT

(11) **EP 2 975 304 B1**
(45) Veröffentlichungstag und Bekanntmachung des Hinweises auf die Patenterteilung: **15.04.2020**
(21) Anmeldenummer: 15176746.4
(22) Anmeldetag: 15.07.2015
(51) Int. Cl.: F16H 61/21, B60W 30/18, F16H 61/4043, F16H 61/4157, F16H 61/431

(54) **VERFAHREN ZUM ABBREMSEN EINES HYDROSTATISCHEN ANTRIEBS**
METHOD FOR BRAKING A HYDROSTATIC DRIVE
PROCEDE DE FREINAGE D'UN ENTRAINEMENT HYDROSTATIQUE

(30) Priorität: 17.07.2014 DE 102014213905
(43) Veröffentlichungstag der Anmeldung: 20.01.2016
(73) Patentinhaber: ROBERT BOSCH GMBH, 70442 Stuttgart (DE)
(72) Erfinder: Behm, Martin, 89073 Ulm (DE)
(74) Vertreter: Thürer, Andreas

(56) Entgegenhaltungen:
- WO-A1-2013/053893
- DE-A1-102010 045 857
- US-A1- 2005 085 979

## Beschreibung

Die vorliegende Erfindung betrifft ein Verfahren zum Abbremsen eines mittels Brennkraftmaschine angetriebenen hydrostatischen Antriebs und einen solchen hydrostatischen Antrieb.

### Stand der Technik

Hydrostatische Antriebe werden häufig zum Antreiben von Arbeitshydraulik oder Fahrantrieben bei mobilen Arbeitsmaschinen, wie bspw. Baustellenfahrzeugen, verwendet. Dabei wird eine primäre Antriebsquelle, beispielsweise eine Brennkraftmaschine, üblicherweise ein Dieselmotor, mit einer Hydropumpe verbunden. Zum Antrieb der mobilen Arbeitsmaschine mit dieser Hydropumpe ist meist im geschlossenen Kreislauf ein Hydromotor verbunden. Aufgrund der Massenträgheit der mobilen Arbeitsmaschine wirkt beim Bremsen dieser mobilen Arbeitsmaschine der Hydromotor, welcher dann durch die Räder der mobilen Arbeitsmaschine angetrieben wird, als Pumpe und fördert ohne Umkehr der Strömungsrichtung Druckmittel in dem geschlossenen hydraulischen Kreislauf. Die so auf ihrer Saugseite mit dem Druckmittel beaufschlagte Hydropumpe wirkt dementsprechend als Hydromotor und erzeugt ein Abtriebsdrehmoment, welches sich an der Brennkraftmaschine abstützt.

Bei langsam fahrenden mobilen Arbeitsmaschinen, wie bspw. Gabelstaplern, wird häufig das hydrostatische Getriebe des Fahrantriebs dazu verwendet, die mobile Arbeitsmaschine auch abzubremsen. Dazu kann die Hydropumpe an der Brennkraftmaschine abgestützt werden. Die so erzielbare Bremsleistung ist durch die verfügbare Bremsleistung (Stützmoment) der Brennkraftmaschine begrenzt.

Aus der EP 1 960 699 B1 ist bspw. ein Verfahren zum Abbremsen eines hydrostatischen Antriebs bekannt, der einen verstellbaren Hydromotor aufweist. Dabei wird zum Abbremsen ein Schluckvolumen des Hydromotors vergrößert und das dadurch geförderte Druckmittel über ein Druckbegrenzungsventil entspannt.

Aus der DE 33 26 891 A1 ist bspw. ein hydrostatischer Antrieb bekannt, bei dem durch ein Ventil, das parallel zu Hydromotor und Hydropumpe angeordnet ist, eine Abbremsung unterstützt wird. Dieses Ventil öffnet durch eine bei Verzögerung bewegte Masse.

Es ist daher wünschenswert, bei hydrostatischen Antrieben, insbesondere mit nicht oder nur in Stufen verstellbaren Hydromotoren, ein Abbremsen ohne Überlastung der Brennkraftmaschine zu ermöglichen.

### Offenbarung der Erfindung

Erfindungsgemäß wird ein Verfahren und eine Vorrichtung mit den Merkmalen des unabhängigen Patentanspruchs 1 vorgeschlagen. Vorteilhafte Ausgestaltungen sind Gegenstand der Unteransprüche sowie der nachfolgenden Beschreibung.

### Vorteile der Erfindung

Ein erfindungsgemäßes Verfahren dient zum Abbremsen eines hydrostatischen Antriebs, insbesondere eines Fahrantriebs, welcher eine von einer Brennkraftmaschine, insbesondere einem Dieselmotor, angetriebene Hydropumpe mit verstellbarem Verdrängungsvolumen und einen mit der Hydropumpe über zwei Leitungen in einem geschlossenen Kreislauf verbundenen Hydromotor aufweist. Zum Beginnen des Abbremsens wird das Verdrängungsvolumen der Hydropumpe reduziert und ein elektrisch angesteuertes Proportionalventil, welches die zwei Leitungen miteinander verbindet, wird geöffnet.

Durch das Öffnen dieses zusätzlichen Proportionalventils wird ein Druckanstieg verhindert, der zu einem zu hohen auf die Brennkraftmaschine wirkenden Drehmoment führen würde. Eine Überdrehzahl und somit Überlastung der Brennkraftmaschine wird damit effektiv verhindert. Ein erfindungsgemäßes Verfahren ist dabei in beide Antriebsrichtungen, insbesondere beide Fahrtrichtungen, durchführbar.

Vorzugsweise wird das Proportionalventil zeitgleich mit der Reduktion des Verdrängungsvolumens der Hydropumpe geöffnet. Dadurch kann ein schnellstmöglicher Druckabbau gewährleistet werden bzw. ein übermäßig hoher Druckanstieg wird bereits von Beginn des Abbremsens an verhindert.

Vorteilhafterweise wird das Proportionalventil nach dem Öffnen allmählich geschlossen, wobei eine Schließgeschwindigkeit des Proportionalventils im Verlauf des Abbremsens in Abhängigkeit von wenigstens einem von mehreren Parametern gesteuert wird. Die mehreren Parameter umfassen dabei wenigstens eine gewünschte Bremswirkung, eine Auslastung der Brennkraftmaschine und einen Druck im Kreislauf. Die Steuerung des Schließvorgangs kann somit bspw. gezielt auf eine gleichmäßige Abbremsung, eine gleichmäßige, insbesondere auch nicht übermäßig hohe, Auslastung der Brennkraftmaschine und/oder einen zulässigen Druck im Kreislauf ausgerichtet werden.

Es ist auch von Vorteil, wenn das Verdrängungsvolumen der Hydropumpe im Verlauf des Abbremsens alternativ oder zusätzlich zum Schließvorgang des Proportionalventils in Abhängigkeit von wenigstens einem der mehreren Parameter gesteuert wird. Je nach Bedarf kann somit entweder das Proportionalventil oder die Hydropumpe verstellt werden. Eine Kombination beider Möglichkeiten erhöht zusätzlich die erzielbare Regelgenauigkeit.

Vorzugsweise wird das Verdrängungsvolumen der Hydropumpe so eingestellt, dass ein von der Hydropumpe auf die Brennkraftmaschine ausgeübtes Drehmoment höchstens so groß wie ein durch die Brennkraftmaschine bereitgestelltes Stützmoment ist. Damit kann das Bremsvermögen der Brennkraftmaschine optimal ausgenutzt werden, insbesondere, wenn das von der Hydropumpe ausgeübte Drehmoment nur sehr knapp unter dem Stützmoment der Brennkraftmaschine liegt.

Vorteilhafterweise wird zum Beenden des Abbremsens das Verdrängungsvolumen der Hydropumpe auf Null eingestellt. Damit kann eine mobile Arbeitsmaschine besonders effektiv bis hin zum Stillstand abgebremst werden.

Es ist von Vorteil, wenn wenigstens ein im Kreislauf vorgesehenes Hochdruckbegrenzungsventil so eingestellt ist, dass im Verlauf des Abbremsens zum Druckabbau im Kreislauf öffnet. Da an einem geöffneten Hochdruckventil zusätzliche Bremsenergie erzeugt wird, kann die Bremsleistung bis an die Leistungsgrenzen von Hydropumpe und Brennkraftmaschine gesteigert werden.

Besonders vorteilhaft kann ein erfindungsgemäßes Verfahren bei einem hydrostatischen Antrieb eingesetzt werden, bei dem der Hydromotor ein konstantes oder in verschiedenen Stufen verstellbares Verdrängungsvolumen aufweist, da hier keine Regelung über den Hydromotor erfolgen kann, dieser jedoch kostengünstiger als ein stufenlos verstellbarer Hydromotor ist.

Der hydrostatische Antrieb weist eine von einer Brennkraftmaschine, insbesondere einem Dieselmotor, angetriebene Hydropumpe mit verstellbarem Verdrängungsvolumen und einen mit der Hydropumpe über zwei Leitungen in einem geschlossenen Kreislauf verbundenen Hydromotor auf. Die zwei Leitungen sind dabei über ein elektrisch ansteuerbares Proportionalventil verbunden.

Ein solches elektrisch ansteuerbares Proportionalventil ermöglicht eine effektive Abbremsung des hydrostatischen Antriebs zur Vermeidung einer Überlastung der Brennkraftmaschine, insbesondere bei Durchführung nach einem erfindungsgemäßen Verfahren. Dazu kann das Proportionalventil sparsam ausgelegt werden, da bei voll geöffnetem Proportionalventil bereits eine gewisse Bremswirkung gewünscht ist und somit ein relativ hoher Druckabfall am Proportionalventil zugelassen werden kann. Außerdem sind keine sonstigen Elemente im Ölkreislauf vorhanden, die während normalem Betrieb Druckverlust verursachen könnten. Daneben kann das Proportionalventil auch eine sog. Kurzschlussfunktion übernehmen, bei der das Proportionalventil einfach geöffnet wird. Dies wird zum Abschleppen einer mobilen Arbeitsmaschine mit hydrostatischem Antrieb benötigt.

Wenn der Hydromotor ein konstantes oder in verschiedenen Stufen verstellbares Verdrängungsvolumen aufweist, kann durch die erfindungsgemäße Verwendung des Proportionalventils eine entsprechend geregelte Abbremsung vorgenommen werden. Da bei solchen Hydromotoren die oben erwähnte Kurzschlussfunktion meistens ohnehin nötig ist, kann damit sogar ein Ventil eingespart werden.

Vorzugsweise ist eine Recheneinheit zur Ansteuerung des Proportionalventils und zur Verstellung des Verdrängungsvolumens der Hydropumpe vorgesehen. Bspw. kann so mittels eines ohnehin vorhandenen Steuergeräts zusätzlich das Proportionalventil angesteuert werden. Daneben kann damit auf einfache Weise eine kombinierte Ansteuerung von Proportionalventil und Hydropumpe erfolgen.

Im Kreislauf des hydrostatischen Antriebs ist üblicherweise zusätzlich wenigstens ein Hochdruckbegrenzungsventil vorgesehen. Diese können vorteilhaft dazu genutzt werden, beim Abbremsen zusätzliche Bremsenergie zu erzeugen.

Eine erfindungsgemäße Recheneinheit, z.B. ein Steuergerät einer mobilen Arbeitsmaschine, ist, insbesondere programmtechnisch, dazu eingerichtet, ein erfindungsgemäßes Verfahren durchzuführen.

Auch die Implementierung der Erfindung in Form von Software ist vorteilhaft, da dies besonders geringe Kosten ermöglicht, insbesondere wenn eine ausführende Recheneinheit noch für weitere Aufgaben genutzt wird und daher ohnehin vorhanden ist. Geeignete Datenträger zur Bereitstellung des Computerprogramms sind insbesondere Disketten, Festplatten, Flash-Speicher, EEPROMs, CD-ROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung ausführlich beschrieben.

### Figurenbeschreibung

Es zeigen
- Figur 1: schematisch einen hydrostatischen Antrieb,
- Figur 2: die Verläufe von Verdrängungsvolumen einer Hydropumpe, Geschwindigkeit einer mobilen Arbeitsmaschine, Drehzahl einer Brennkraftmaschine sowie Drücken im hydrostatischen Kreislauf bei Abbremsen eines hydrostatischen Antriebs gemäß Stand der Technik,
- Figuren 3a bis 3c: schematisch drei nicht erfindungsgemäße Ausgestaltungen eines hydrostatischen Antriebs,
- Figur 4: schematisch einen erfindungsgemäßen hydrostatischen Antrieb in einer bevorzugten Ausgestaltung und
- Figur 5: die Verläufe von Verdrängungsvolumen einer Hydropumpe, Öffnungsquerschnitt eines Proportionalventils, Geschwindigkeit einer mobilen Arbeitsmaschine, Drehzahl einer Brennkraftmaschine sowie Drücken im hydrostatischen Kreislauf bei Abbremsen eines hydrostatischen Antriebs nach einem erfindungsgemäßen Verfahren in einer bevorzugten Ausführungsform.

### Detaillierte Beschreibung der Zeichnung

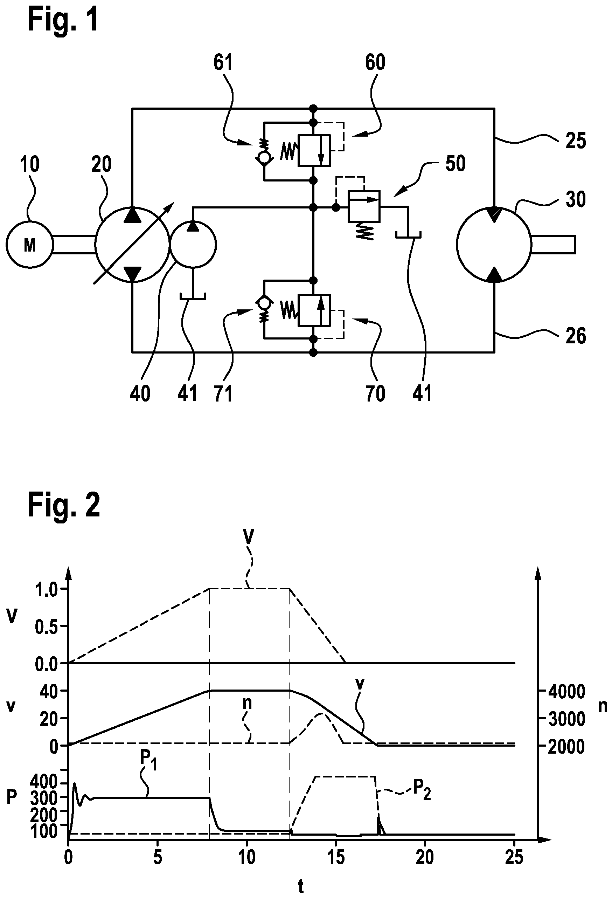

In Figur 1 ist schematisch ein hydrostatischer Antrieb, wie er bspw. in mobilen Arbeitsmaschinen Verwendung findet, mit Hydromotor mit konstantem oder nur in verschiedenen Stufen verstellbarem Verdrängungsvolumen dargestellt.

Der hydrostatische Antrieb, insbesondere in Verwendung als hydrostatischer Fahrantrieb, weist eine Brennkraftmaschine 10, bei welcher es sich üblicherweise um einen Dieselmotor handelt, eine von der Brennkraftmaschine 10 angetriebene Hydropumpe 20 sowie den Hydromotor 30 auf. Die Hydropumpe 20 ist stufenlos verstellbar, d.h. das Verdrängungsvolumen der Hydropumpe ist stufenlos verstellbar. Eine solche Verstellung des Verdrängungsvolumens wird üblicherweise über die Verstellung des Schwenkwinkels erzielt, wenn es sich bei der Hydropumpe um eine Axialkolbenpumpe in Schrägscheibenbauweise handelt. Die Hydropumpe 20 ist über zwei Leitungen 25, 26 mit dem Hydromotor 30 verbunden, d.h. Hydropumpe 20 und Hydromotor 30 befinden sich in einem geschlossenen hydraulischen Kreislauf.

Eine Hilfspumpe 40 ist über ein Druckbegrenzungsventil 50 mit einem Tank 41 verbunden, d.h. die Hilfspumpe 40 befindet sich in einem offenen Kreislauf. Weiterhin sind zwei, üblicherweise baugleiche, Druckbegrenzungsventile 60 und 70 und jeweils dazu parallele Rückschlagventile 61 und 71 vorgesehen, die jeweils auf einer Seite mit einer der Leitungen 25 bzw. 26 und auf der anderen Seite über das Druckbegrenzungsventil 50 mit dem Tank 41 verbunden sind. Bei geeigneter Einstellung der Druckbegrenzungsventile 50, 60 und 70 wird ein Überdruck im geschlossenen Kreislauf mit Hydropumpe 20 und Hydromotor 30 verhindert. Durch entsprechende Kopplung der Hilfspumpe 40 die Brennkraftmaschine 10 kann über die Rückschlagventile 61 und 71 Druckmittel in den Kreislauf eingebracht werden, bspw. bei einem initialen Auffüllen.

Ein Abbremsen des hydrostatischen Antriebs durch Reduzierung des Verdrängungsvolumens der Hydropumpe 20 führt dazu, dass der Hydromotor 30 als Pumpe fungiert und über die Hydropumpe 20, welche dann als Motor fungiert, die Brennkraftmaschine 10 antreibt. In Abhängigkeit von Fahrantriebsauslegung, Masse, Geschwindigkeit sowie Verzögerung der mobilen Arbeitsmaschine und dem Stützmoment der Brennkraftmaschine kann dies ohne weitere Komponenten zu unerwünscht hohen Drehzahlen der Brennkraftmaschine führen.

In Figur 2 sind im oberen Diagramm ein Verlauf des Verdrängungsvolumen V der Hydropumpe 20, im mittleren Diagramm Verläufe der Geschwindigkeit v in km/h der mobilen Arbeitsmaschine und Drehzahl n in 1/min der Brennkraftmaschine und im unteren Diagramm Verläufe der Drücke P1 und P2 in bar am Hydromotor 30 bzw. an der Hydropumpe 20 im hydrostatischen Kreislauf bei Abbremsen eines hydrostatischen Antriebs, wie oben beschrieben, jeweils über der Zeit t in s, gezeigt.

Wie im mittleren Diagramm an der Geschwindigkeit v zusehen ist, beschleunigt die mobile Arbeitsmaschine bis t = 8 s, anschließend fährt sie mit konstanter Geschwindigkeit v bis t = 12,5 s. Die Drehzahl n der Brennkraftmaschine bleibt in diesem Zeitraum konstant. Das Verdrängungsvolumen V der Hydropumpe hingegen nimmt während der Beschleunigung zu, wie im oberen Diagramm zu sehen ist, und bleibt bei konstanter Geschwindigkeit konstant.

Im unteren Diagramm ist zu sehen, dass der Druck P1 am Hydromotor 30 während der Zeit der Beschleunigung auf einem höheren Druckniveau liegt, anschließend jedoch wieder auf einen niedrigeren Wert zurückgeht und dort während der konstanten Geschwindigkeit bleibt. Der niedrigere Wert ergibt sich aus der Summe der Fahrwiderstände bzw. Verluste.

Zum Abbremsen wird zum Zeitpunkt t = 12,5 s das Verdrängungsvolumen reduziert. Entsprechend steigt der Druck P2 an der Hydropumpe 20 an und die Geschwindigkeit v geht zurück. Allerdings ist auch zu sehen, dass die Drehzahl n der Brennkraftmaschine mit Beginn des Abbremsens ansteigt. Ein solches Ansteigen der Drehzahl der Brennkraftmaschine ist unerwünscht, da ein maximal zulässiger Drehzahlwert nicht überschritten werden soll. Vor allem bei Dieselmotoren sind zu hohe Drehzahlen unerwünscht, da dies zu Schäden am Dieselmotor führen kann.

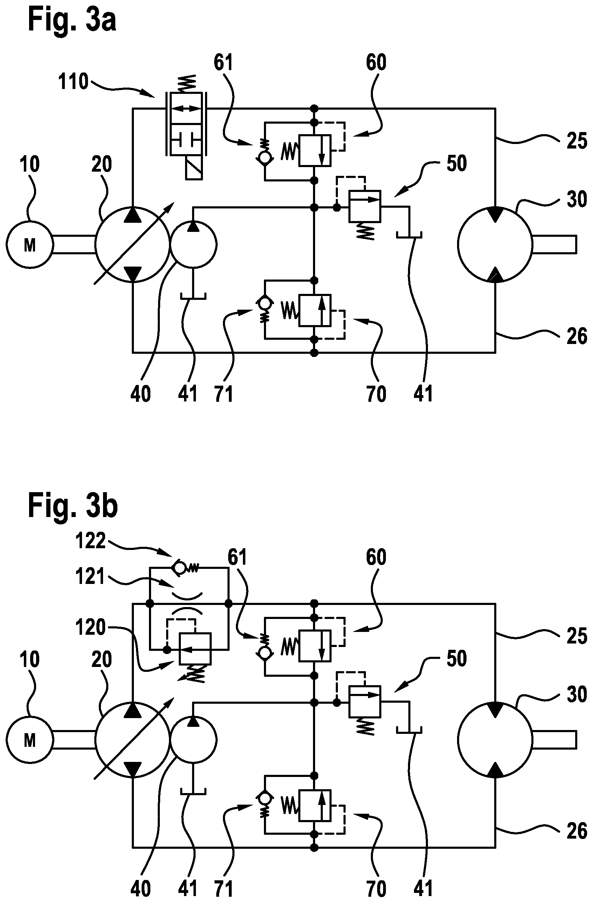

In den Figuren 3a bis 3c sind drei nicht erfindungsgemäße Möglichkeiten gezeigt, wie der in Figur 1 gezeigte hydrostatische Antrieb erweitert werden kann, um ein effektiveres Abbremsen zu ermöglichen.

In Figur 3a ist in der Leitung 25 für den Rücklauf zusätzlich ein Proportionalventil 110 zur Drosselung des Hydromotors vorgesehen. Damit kann ein Energieabbau am Proportionalventil 110 sowie am Druckbegrenzungsventil 60 und ggf. an der Brennkraftmaschine 10 erfolgen. Damit kann aber kein sofortiger Druckanstieg an der Hydropumpe 20 verhindert werden.

In Figur 3b ist in der Leitung 25 für den Rücklauf zusätzlich ein Druckminderungsventil 120 inkl. Blende 121 und Rückschlagventil 122 zur Druckminderung vorgesehen. Damit kann der Druck an der Hydropumpe 20 begrenzt werden und ein Energieabbau kann an der Blende 121, am Druckbegrenzungsventil 60 sowie an der Brennkraftmaschine 10 erfolgen. Nachteilig an dieser Ausführungsform ist, dass das Stützmoment der Brennkraftmaschine 10 nicht über die gesamte Bremsung voll ausgenutzt wird, da der Druck an der Hydropumpe 20 konstant gehalten wird und sich somit das Pumpenmoment bei abnehmendem des Verdrängungsvolumen verringert. Weiterhin muss auch bei normaler Fahrt das Rückschlagventil als zusätzliches Bauteil durchströmt werden und die dargestellte Ausführungsform funktioniert nur in einer Fahrtrichtung.

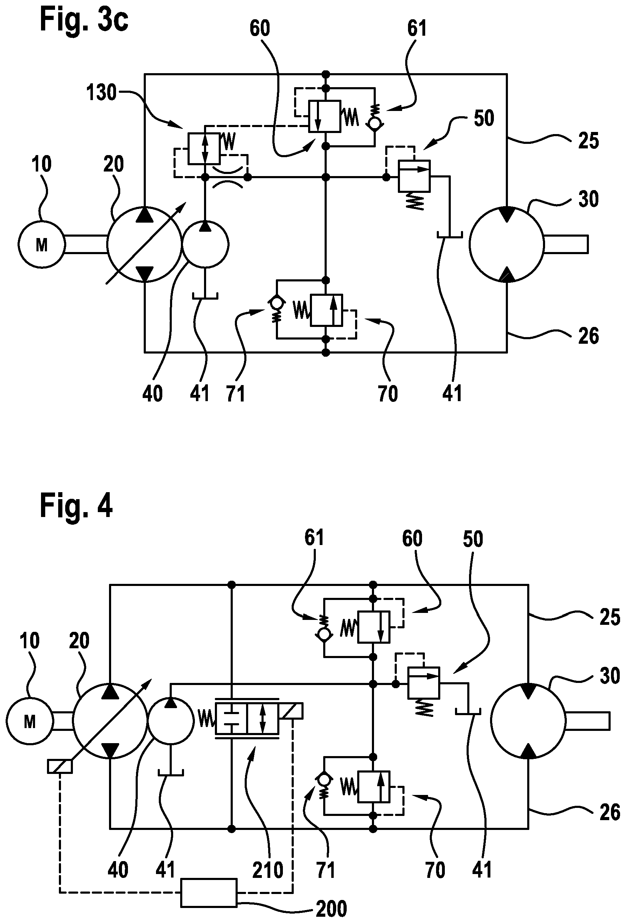

In Figur 3c ist ein zusätzliches Ventil 130 vorgesehen, das im Kreislauf der Hilfspumpe 40 angeordnet ist. Damit kann bspw. das Druckbegrenzungsventil 60 in Abhängigkeit von der Drehzahl der Brennkraftmaschine übersteuert werden. Diese Anordnung bewirkt zwar einen Schutz der Brennkraftmaschine, jedoch kann damit keine zusätzliche Bremswirkung, etwa durch Energieabbau, erzielt werden.

In Figur 4 ist ein erfindungsgemäßer hydrostatischer Antrieb dargestellt. Zusätzlich zu dem bereits in Figur 1 beschriebenen hydrostatischen Antrieb ist hier ein elektrisch ansteuerbares Proportionalventil 210, ein sog. elektroproportionales Ventil, vorgesehen, durch welches die zwei Leitungen 25 und 26 verbunden werden. Vorzugsweise befindet sich das Proportionalventil 210 in oder nahe der Hydropumpe 20. Das Proportionalventil 210 ist über eine als Steuergerät 200 ausgebildete Recheneinheit ansteuerbar, durch welche auch die Hydropumpe 20 ansteuerbar ist.

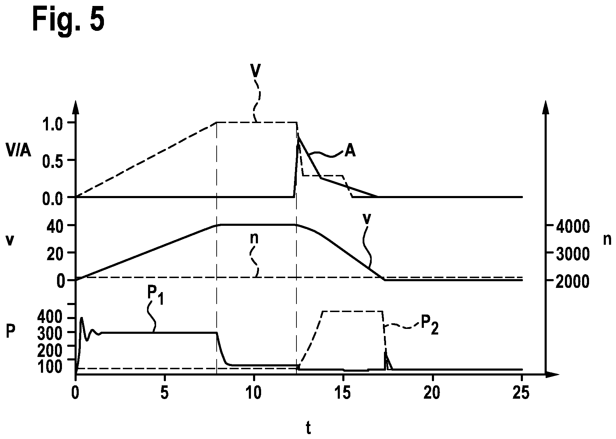

In Figur 5 sind im oberen Diagramm Verläufe des Verdrängungsvolumen V der Hydropumpe 20 und ein Öffnungsquerschnitt A des Proportionalventils 210, im mittleren Diagramm Verläufe der Geschwindigkeit v in km/h der mobilen Arbeitsmaschine und Drehzahl n in 1/min der Brennkraftmaschine und im unteren Diagramm Verläufe der Drücke P1 und P2 in bar am Hydromotor 30 bzw. an der Hydropumpe 20 im hydrostatischen Kreislauf bei einem erfindungsgemäßen Abbremsen eines hydrostatischen Antriebs, jeweils über der Zeit t in s, gezeigt.

Bis zum Zeitpunkt t = 11 s, d.h. einem Beschleunigen und anschließender konstanter Geschwindigkeit der mobilen Arbeitsmaschine, entsprechen die Verläufe in den Diagrammen denen in den Diagrammen in Figur 2, dort bis zum Zeitpunkt t = 12,5 s. Zum Beginnen des Abbremsens werden nun zeitgleich das Verdrängungsvolumen V der Hydropumpe 20 reduziert und das Proportionalventil 210 geöffnet, was im oberen Diagramm als ansteigender Öffnungsquerschnitt A dargestellt ist.

Das Öffnen des Proportionalventils 210 verbindet die Leitungen 25 und 26, wodurch über das Proportionalventil 210 ein Teil des Druckmittels vom Hydromotor 30 direkt zurück zum Hydromotor 30 selbst fließen kann, ohne zur Hydropumpe 20 zu gelangen. Damit wird ein übermäßiger Druckanstieg verhindert. Im unteren Diagramm ist dies am Verlauf des Drucks P2 an der Hydropumpe 20 zu erkennen. Dort ist - im Vergleich zum Verlauf in Figur 2 - der Anstieg zunächst weniger steil.

Zudem wird dadurch das durch die Hydropumpe 20 auf die Brennkraftmaschine 10 ausgeübte Moment niedrig gehalten und die Brennkraftmaschine wird nicht überbeansprucht, was im mittleren Diagramm daran zu erkennen ist, dass sich die Drehzahl n nicht erhöht, sondern konstant bleibt.

Im weiteren Verlauf ist zu sehen, dass sich durch eine geeignete Steuerung des Schließvorgangs des Proportionalventils 210 und eine geeignete Steuerung des Verdrängungsvolumens V der Hydropumpe 20 eine gewünschte Bremswirkung erzielen lässt, was am Verlauf der Geschwindigkeit v zu sehen ist. Ferner wird das Verdrängungsvolumen V bis auf Null reduziert, um einen völligen Stillstand der mobilen Arbeitsmaschine zu erreichen.

## Patentansprüche

1. Verfahren zum Abbremsen eines hydrostatischen Antriebs, welcher eine von einer Brennkraftmaschine (10) angetriebene Hydropumpe (20) mit verstellbarem Verdrängungsvolumen (V) und einen mit der Hydropumpe (20) über zwei Leitungen (25, 26) in einem geschlossenen Kreislauf verbundenen Hydromotor (30) aufweist, wobei das Abbremsen des hydrostatischen Antriebs durch Reduzierung des Verdrängungsvolumens der Hydropumpe (20) erfolgt;
wobei zum Beginnen des Abbremsens das Verdrängungsvolumen (V) der Hydropumpe (20) reduziert wird, und
wobei ein elektrisch angesteuertes Proportionalventil (210), welches die zwei Leitungen (25, 26) miteinander verbindet, geöffnet wird.

2. Verfahren nach Anspruch 1, wobei das Proportionalventil (210) zeitgleich mit der Reduktion des Verdrängungsvolumens (V) der Hydropumpe (20) geöffnet wird.

3. Verfahren nach Anspruch 1 oder 2, wobei das Proportionalventil (210) nach dem Öffnen allmählich geschlossen wird und wobei eine Schließgeschwindigkeit des Proportionalventils (210) im Verlauf des Abbremsens in Abhängigkeit von wenigstens einem von mehreren Parametern gesteuert wird, wobei die mehreren Parameter eine gewünschte Bremswirkung, eine Auslastung der Brennkraftmaschine (10) und einen Druck (P1, P2) im Kreislauf umfassen.

4. Verfahren nach einem der vorstehenden Ansprüche, wobei das Verdrängungsvolumen (V) der Hydropumpe (20) im Verlauf des Abbremsens in Abhängigkeit von wenigstens einem von mehreren Parametern gesteuert wird, wobei die mehreren Parameter eine gewünschte Bremswirkung, eine Auslastung der Brennkraftmaschine (10) und einen Druck (P1, P2) im Kreislauf umfassen.

5. Verfahren nach einem der vorstehenden Ansprüche, wobei das Verdrängungsvolumen (V) der Hydropumpe (20) so eingestellt wird, dass ein von der Hydropumpe (20) auf die Brennkraftmaschine (10) ausgeübtes Drehmoment höchstens so groß wie ein durch die Brennkraftmaschine (10) bereitgestelltes Stützmoment ist.

6. Verfahren nach einem der vorstehenden Ansprüche, wobei zum Beenden des Abbremsens das Verdrängungsvolumen (V) der Hydropumpe (20) auf Null eingestellt wird.

7. Verfahren nach einem der vorstehenden Ansprüche, wobei wenigstens ein im Kreislauf vorgesehenes Hochdruckbegrenzungsventil (60, 70) so eingestellt ist, dass es im Verlauf des Abbremsens zum Druckabbau im Kreislauf öffnet.

8. Verfahren nach einem der vorstehenden Ansprüche, wobei der Hydromotor (30) ein konstantes oder in verschiedenen Stufen verstellbares Verdrängungsvolumen aufweist.

9. Recheneinheit (200), die dazu eingerichtet ist, ein Verfahren nach einem der vorstehenden Ansprüche durchzuführen.

10. Computerprogramm, das eine Recheneinheit (200) veranlasst, ein Verfahren nach einem der Ansprüche 1 bis 8 durchzuführen, wenn es auf der Recheneinheit (200) ausgeführt wird.

11. Maschinenlesbares Speichermedium mit einem darauf gespeicherten Computerprogramm nach Anspruch 14.

## Claims

1. Method for braking a hydrostatic drive which has a hydraulic pump (20), which is driven by an internal combustion engine (10) and has a variable displacement volume (V), and a hydraulic motor (30) which is connected to the hydraulic pump (20) via two lines (25, 26) in a closed circuit, the braking of the hydrostatic drive taking place by way of reduction of the displacement volume of the hydraulic pump (20);
the displacement volume (V) of the hydraulic pump (20) being reduced in order to begin the braking, and
an electrically actuated proportional valve (210) which connects the two lines (25, 26) to one another being opened.

2. Method according to Claim 1, the proportional valve (210) being opened at the same time as the reduction of the displacement volume (V) of the hydraulic pump (20).

3. Method according to Claim 1 or 2, the proportional valve (210) being closed gradually after the opening, and a closing speed of the proportional valve (210) being controlled in the course of the braking in a manner which is dependent on at least one of a plurality of parameters, the plurality of parameters comprising a desired braking action, a load of the internal combustion engine (10) and a pressure (P1, P2) in the circuit.

4. Method according to one of the preceding claims, the displacement volume (V) of the hydraulic pump (20) being controlled in the course of the braking in a manner which is dependent on one of a plurality of parameters, the plurality of parameters comprising a desired braking action, a load of the internal combustion engine (10) and a pressure (P1, P2) in the circuit.

5. Method according to one of the preceding claims, the displacement volume (V) of the hydraulic pump (20) being set in such a way that a torque which is exerted by the hydraulic pump (20) on the internal combustion engine (10) is at most as great as a supporting moment which is provided by way of the internal combustion engine (10).

6. Method according to one of the preceding claims, the displacement volume (V) of the hydraulic pump (20) being set to zero in order to end the braking.

7. Method according to one of the preceding claims, at least one high pressure limiting valve (60, 70) which is provided in the circuit being set in such a way that it opens in the course of the braking in order to dissipate the pressure in the circuit.

8. Method according to one of the preceding claims, the hydraulic motor (30) having a displacement volume which is constant or can be adjusted in various stages.

9. Computing unit (200) which is set up to carry out a method according to one of the preceding claims.

10. Computer program which causes a computing unit (200) to carry out a method according to one of Claims 1 to 8 when the said computer program is executed on the computing unit (200).

11. Machine-readable storage medium with a computer program according to Claim 14 which is stored on it.

## Revendications

1. Procédé de freinage d'un entraînement hydrostatique qui comporte une pompe hydraulique (20) à volume de déplacement réglable (V) qui est entraînée par un moteur à combustion interne (10) et un moteur hydraulique (30) relié à la pompe hydraulique (20) en circuit fermé par le biais de deux conduits (25, 26), le freinage de l'entraînement hydrostatique se faisant par réduction du volume de déplacement de la pompe hydraulique (20) ;
le volume de déplacement (V) de la pompe hydraulique (20) étant réduit pour commencer le freinage, et
une vanne proportionnelle à commande électrique (210), qui relie les deux conduits (25, 26) l'un à l'autre, étant ouverte.

2. Procédé selon la revendication 1, la vanne proportionnelle (210) étant ouverte conjointement avec la réduction du volume de déplacement (V) de la pompe hydraulique (20).

3. Procédé selon la revendication 1 ou 2, la vanne proportionnelle (210) étant fermée progressivement après ouverture et une vitesse de fermeture de la vanne proportionnelle (210) étant commandée au cours du freinage en fonction d'au moins un paramètre de la pluralité de paramètres, la pluralité de paramètres comprenant un effet de freinage souhaité, une charge du moteur à combustion interne (10) et une pression (P1, P2) dans le circuit.

4. Procédé selon l'une des revendications précédentes, le volume de déplacement (V) de la pompe hydraulique (20) étant commandé en cours de freinage en fonction d'au moins un paramètre de la pluralité de paramètres, la pluralité de paramètres comprenant un effet de freinage souhaité, une charge du moteur à combustion interne (10) et une pression (P1, P2) dans le circuit.

5. Procédé selon l'une des revendications précédentes, le volume de déplacement (V) de la pompe hydraulique (20) étant réglé de telle sorte qu'un couple exercé par la pompe hydraulique (20) sur le moteur à combustion interne (10) soit aussi grand qu'un couple de support produit par le moteur à combustion interne (10).

6. Procédé selon l'une des revendications précédentes, le volume de déplacement (V) de la pompe hydraulique (20) étant réglé à zéro pour terminer le freinage.

7. Procédé selon l'une des revendications précédentes, au moins une vanne de limitation de haute pression (60, 70) prévue dans le circuit étant réglée de manière à s'ouvrir au cours du freinage pour réduire la pression dans le circuit.

8. Procédé selon l'une des revendications précédentes, le moteur hydraulique (30) ayant un volume de déplacement constant ou réglable dans différents étages.

9. Unité informatique (200) qui est adaptée pour mettre en œuvre un procédé selon l'une des revendications précédentes.

10. Logiciel qui ordonne à une unité informatique (200) de mettre en œuvre un procédé selon l'une des revendications 1 à 8 lorsqu'il est exécuté sur l'unité informatique (200).

11. Support de stockage lisible par machine comprenant un logiciel selon la revendication 14 mémorisé sur celui-ci.
